# EUROPEAN PATENT APPLICATION

(11) **EP 3 336 708 A1**
(43) Date of publication of application: **20.06.2018**
(21) Application number: 17207796.8
(22) Date of filing: 15.12.2017
(51) Int. Cl.: G06F 12/0804, G06F 12/0866, G06F 12/12

(54) **DETERMINISTIC TIMING EVALUATION**

(30) Priority: 16.12.2016 US 201615381349
(71) Applicant: Hamilton Sundstrand Corporation, Charlotte, NC 28217-4578 (US)
(72) Inventor: FRUECHTENICHT, Brian, Loves Park, IL Illinois 61111 (US); LEIBHAM, Terrence R., St. Charles, IL Illinois 60175 (US); PEREIRA, Alex, Bronx, NY New York 10463 (US); SCHMIDT, Jeffery S., Rockton, IL Illinois 61072 (US); KRISHNAKUMAR, Balaji, 560092 Bangalore, Karnataka (IN)
(74) Representative: Iceton, Greg James

(57) **Abstract**

A method and system (100) to perform deterministic timing analysis of a plurality of software tasks involves cache memory (120) that is shared by the plurality of software tasks. Real memory (130) is accessible by the plurality of software tasks. A task scheduler (145) establishes a cache flush between executions of consecutive tasks among the plurality of software tasks. The cache flush includes movement of data in the cache memory to the real memory. A processor (140) executes the plurality of software tasks to obtain a worst case execution time (WCET) associated with each of the plurality of software tasks.

## Description

### BACKGROUND

Exemplary embodiments pertain to the art of evaluating execution time of a system processed by a real-time operating system (RTOS).

The design of systems that are implemented with hardware, software, and firmware includes establishing and ensuring compliance with timing and performance constraints. Accordingly, an accurate worst case execution time (WCET) must be established for the execution of software applications, for example. When certain conditions result in an artificial or inconsistent improvement in the WCET, the system design can be negatively affected.

### BRIEF DESCRIPTION

Disclosed is a system to perform deterministic timing analysis of a plurality of software tasks. A cache memory that is shared by the plurality of software tasks. Real memory accessible by the plurality of software tasks. A task scheduler establishes a cache flush between executions of consecutive tasks among the plurality of software tasks. The cache flush includes movement of data in the cache memory to the real memory. A processor executes the plurality of software tasks to obtain a worst case execution time (WCET) associated with each of the plurality of software tasks.

Also disclosed is a method of performing deterministic timing analysis of a plurality of software tasks. The method includes establishing a cache flush between executions of consecutive tasks among the plurality of software tasks. The cache flush includes movement of data in cache memory that is shared by the plurality of software tasks to real memory. Executing the plurality of software tasks provides a worst case execution time (WCET) associated with each of the plurality of software tasks.

Additionally disclosed is a non-transitory computer-readable medium that stores instructions which, when processed by a processor, implement a method of performing deterministic timing analysis of a plurality of software tasks. The method includes establishing a cache flush between execution of consecutive tasks among the plurality of software tasks. The cache flush includes movement of data in cache memory that is shared by the plurality of software tasks to real memory. The method also includes obtaining a worst case execution time (WCET) associated with each of the plurality of software tasks based on executing the plurality of software tasks with the cache flush between executions of consecutive tasks.

### BRIEF DESCRIPTION OF THE DRAWINGS

The following descriptions should not be considered limiting in any way. With reference to the accompanying drawings, like elements are numbered alike:
FIG. 1 is a block diagram of a system in an aircraft that includes software tasks and performs deterministic timing analysis of the software tasks according to one or more embodiments; and
FIG. 2 is a process flow of a method of performing deterministic timing analysis on a system that includes software tasks according to one or more embodiments.

### DETAILED DESCRIPTION

A detailed description of one or more embodiments of the disclosed apparatus and method are presented herein by way of exemplification and not limitation with reference to the Figures.

As previously noted, WCET is one of the parameters that must be determined accurately in order to ensure that a system design meets timing and performance requirements. Embodiments discussed herein specifically refer to an avionic system and, more specifically, a time and space partition real-time operating system (RTOS) for explanatory purposes. The time and space partition RTOS refers to a grouping of certain programs or tasks into each of a number of partitions. The tasks within a given partition are subject to similar certification in the avionics field, for example. Each partition is assigned a portion of available memory space and time. However, the systems and methods detailed herein are not limited to any particular application or to only a partitioned RTOS.

In the exemplary avionic system, microprocessors include cache memory for temporary storage of data and instructions. Cache memory is a hardware component. Unlike the real memory in the exemplary partitioned RTOS, cache memory is not partitioned and is shared by tasks of all the different partitions in the time and space RTOS. A bank of cache memory can be referred to as a cache way. The size of a cache way can be microprocessor specific. For example, 32 bytes can make up a block of cache memory, and 128 blocks can make up a cache way. A memory manager of the microprocessor applies rules to determine the data and instructions that are kept in cache memory for quick access. The rules can be based on frequency of access and time of last access, for example. When data or an instruction needed by a software task is already in cache memory, the execution of that task is faster than when the task must retrieve the data or instruction from real memory.

A task scheduler performs and maintains the RTOS time partitioning. Each task or partition identifies three parameters to the RTOS: the task period (i.e., frequency of execution), the task deadline (i.e., how quickly the task must be executed after being scheduled), and the task WCET (i.e., the maximum amount of real time that the task requires to complete one task cycle). The accuracy of the WCET reported to the task scheduler is important to avoid Task Overruns. When a task fails to complete execution and return control to the RTOS prior to its WCET being exceeded, a Task Overrun results. A Task Overrun causes the RTOS to reset the task and all other tasks in the same partition. Based on the partition of a failed task, the entire microprocessor may be reset. Thus, it is desirable to avoid a false or inconsistent improvement in execution time that results in a WCET that is less than the true WCET.

In the exemplary case of the partitioned RTOS, false improvement in WCET can result from the shared cache memory. The resulting variation in execution time of a task can be referred to as cache jitter and is further explained through an example. The task scheduler can establish a static task schedule that includes execution of task B following execution of task A at a particular point. If task A seldom accesses external memory, the data put into cache memory by task B will be retained the majority of the time that task B is executed after task A. This retention of data needed by task B in the cache memory represents a real-time savings to task B, because the time needed to obtain that data from real memory is not taken.

However, if task A encounters a condition that causes it to obtain a significant amount of external memory one time, then the data placed in cache memory by task B will be flushed (moved to real memory). As a result, the next time task B executes, it will run slower because it must fetch the data from real memory rather than the significantly faster cache memory. This variation in the execution time of task B is cache jitter, and it means that the execution time obtained for task B when task A does not result in a cache flush of the data of task B is a false improvement in the execution time of task B. That is, the improved execution time of task B when data is retained in the cache memory is inconsistent and is does not represent a true WCET value.

Embodiments of the systems and methods detailed herein relate to deterministic timing evaluation to obtain an accurate and consistent WCET. Specifically, the potential retention of data in cache memory is prevented so that the true worst case execution time is always obtained.

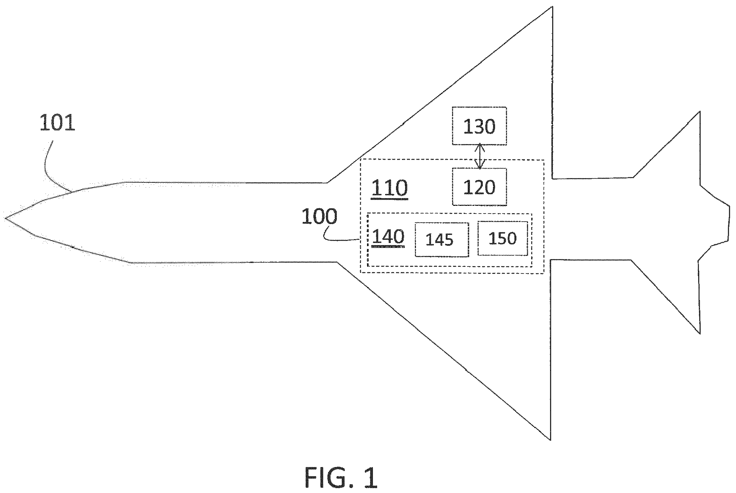

FIG. 1 is a block diagram of a system 100 in an aircraft 101 that includes software tasks and performs deterministic timing analysis of the software tasks according to one or more embodiments. The system 100 includes one or more microprocessors 110 with cache memory 120 and real memory 130 (e.g., external memory). One or more processors 140 implement the partitioned task instructions. For explanatory purposes a task scheduler 145 and memory manager 150 are indicated. The task scheduler 145 and memory manager 150 can be functionalities implemented by the one or more processors 140.

According to one or more embodiments, the memory manager 150 locks one or more cache ways of the cache memory 120. Further, the task scheduler 145 instructs the memory manager 150 to flush the cache memory 120 between executions of different tasks. The cache flush refers to moving data from cache memory 120 to real memory 130 and is performed between tasks whether the tasks are in the same partition or in different partitions. Specifically, data that was modified in the cache memory is moved to real memory. The purpose of locking some of the cache ways (i.e., a subset of the cache memory 120) is to reduce the time required for the cache flush. The cache locking is achieved by writing invalid addresses to some of the cache ways. As a result of the invalid addresses, the locked cache ways are never selected for use by any of the tasks. By flushing the cache memory 120 (that is not locked) between tasks, the previously described instance of data for a given task being retained in cache memory 120 and, thus, reducing execution time for the given task in only that instance is prevented. Each execution of the given task will take the same time such that a deterministic timing analysis can be performed.

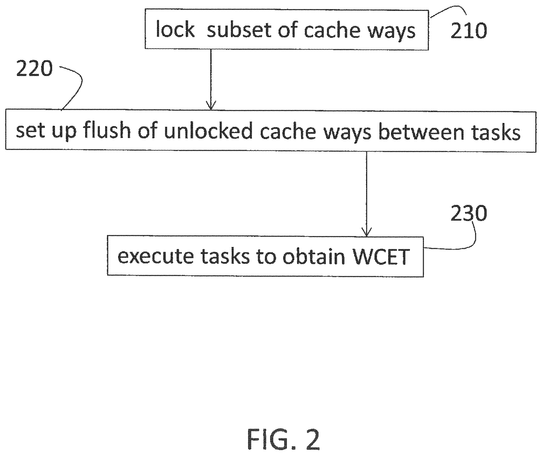

FIG. 2 is a process flow of a method of performing deterministic timing analysis on a system 100 that includes software tasks according to one or more embodiments. At block 210, locking a subset of the cache ways refers to preventing the use of a subset of the cache memory 120. At block 220, setting up a flush of unlocked cache ways between tasks includes the task scheduler 145 instructing the memory manager 150 to move data from the cache memory 120 to (external) real memory 130 after execution of one task and before execution of another task. The locking of a subset of cache memory 120 (at block 210) limits the amount of data that must be moved during the flush (at block 220) and thereby reduces the time needed to perform the cache flush.

Once the cache flush is established between tasks (at block 220), the processes include executing tasks to obtain the WCET of each of the tasks, at block 230. That is, the system 100 performs as normal after the cache flush is set up. Because the cache flush ensures that no data is retained in the cache memory 120 for use by a subsequent task, deterministic timing analysis is facilitated, and the true WCET, without false or inconsistent improvements in execution time, can be obtained.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A system (100) to perform deterministic timing analysis of a plurality of software tasks, the system comprising:
cache memory (120) that is shared by the plurality of software tasks;
real memory (130) accessible by the plurality of software tasks;
a task scheduler (145) configured to establish a cache flush between executions of consecutive tasks among the plurality of software tasks, wherein the cache flush includes movement of data in the cache memory to the real memory; and
a processor (140) configured to execute the plurality of software tasks to obtain a worst case execution time (WCET) associated with each of the plurality of software tasks.

2. The system according to claim 1, further comprising a memory manager configured to lock a subset of the cache memory.

3. The system according to claim 2, wherein the subset of the cache memory is not used by the plurality of software tasks and does not require the cache flush.

4. The system according to claim 1, wherein the cache memory is part of a microprocessor and the real memory is external to the microprocessor.

5. The system according to claim 1, wherein the plurality of software tasks are partitioned into two or more groups and the real memory is apportioned among the two or more groups.

6. The system according to claim 1, wherein the system is disposed in an aircraft.

7. A method of performing deterministic timing analysis of a plurality of software tasks, the method comprising:
establishing a cache flush between executions of consecutive tasks among the plurality of software tasks, wherein the cache flush includes movement of data in cache memory that is shared by the plurality of software tasks to real memory; and
executing, using a processor, the plurality of software tasks to obtain a worst case execution time (WCET) associated with each of the plurality of software tasks.

8. The method according to claim 7, further comprising locking a subset of the cache memory, wherein the cache memory is part of a microprocessor that executes the plurality of software tasks and the real memory is external to the microprocessor.

9. The method according to claim 8, further comprising disposing the microprocessor and the real memory in an avionic system.

10. The method according to claim 7, further comprising partitioning the plurality of software tasks into two or more groups and apportioning the real memory among the two or more groups.
